# EUROPEAN PATENT SPECIFICATION

(11) **EP 1 473 085 B1**
(45) Date of publication and mention of the grant of the patent: **22.07.2015**
(21) Application number: 04007667.1
(22) Date of filing: 30.03.2004
(51) Int. Cl.: B01L 3/00, B01J 19/00

(54) **Biochemical reaction cartridge**
Behälter für biochemische Reaktionen
Cassette pour réaction biochimique

(30) Priority: 31.03.2003 JP 2003094242; 26.01.2004 JP 2004017015
(43) Date of publication of application: 03.11.2004
(73) Proprietor: CANON KABUSHIKI KAISHA, Tokyo (JP)
(72) Inventor: Numajiri, Yasuyuki, Ohta-ku, Tokyo (JP); Shimizu, Satoshi, Ohta-ku, Tokyo (JP); Itoh, Hiroshi, Ohta-ku, Tokyo (JP); Tanaka, Shinya, Ohta-ku, Tokyo (JP)
(74) Representative: TBK

(56) References cited:
- US-A- 5 863 502
- US-A1- 2002 123 059
- US-A1- 2002 192 112

## Description

### FIELD OF THE INVENTION AND RELATED ART

The present invention relates to biochemical reaction cartridge used to be incorporated in an apparatus for analyzing cell, microorganism, chromosome, nucleic acid, etc., in a specimen by utilizing a biochemical reaction such as antigen-antibody reaction or nucleic acid hybridization.

Most of analyzers for analyzing specimens such as blood uses an immunological procedure utilizing antigen-antibody reaction or a procedure utilizing nucleic acid hybridization. For example, protein, such as antibody or antigen, or single-stranded nucleic acid, which specifically connects with a material or substance to be detected, is used as a probe and is fixed on a surface of solid phase, such as fine particles, beads or a glass plate, thus effecting antigen-antibody reaction or nucleic acid hybridization. Then, for example, an antigen-antibody compound or double-stranded nucleic acid is detected by a labeled antigen or labeled nucleic acid, which causes a specific interaction such that a labeled material having a high detection sensitivity, such as an enzyme, a fluorescent material or a luminescent material, is supported, thus effecting detection of presence or absence of the material to be detected or quantitative determination the detected material.

As an extension of these technologies, e.g., U.S. Patent No. 5,445,934 has disclosed a so-called DNA (deoxyribonucleic acid) array wherein a large number of DNA probes having mutually different base sequences are arranged on a substrate in array form.

Further, Anal. Biochem., 270(1), pp. 103 - 111 (1999) has disclosed a process for preparing a protein array, like the DNA array, such that various species of proteins are arranged on a membrane filter. By using these DNA and protein arrays and the like, it has become possible to effect a test on a large number of items at the same time.

Further, in various methods of specimen analysis, in order to realize alleviation of contamination by specimen, promotion of reaction efficiency, reduction in apparatus size, and facilitation of operation, there have been also proposed disposable biochemical reaction cartridges in which a necessary reaction is performed in the cartridge. For example, Japanese Laid-Open Patent Application (JP-A) (Tokuhyo) Hei 11-509094 has disclosed a biochemical reaction cartridge, including DNA array, in which a plurality of chambers are disposed and a solution is moved by a differential pressure so as to permit a reaction such as extraction, amplification or hybridization of DNA in a specimen within the cartridge..

As a method of supplying a reagent with respect to the biochemical reaction cartridge, JP-A 2000-266759 has disclosed that a reagent is supplied from an external reagent bottle to a disposable analysis cassette. Further, JP-A (Tokuhyo) Hei 11-505094 has disclosed that a reagent is incorporated in a chamber in advance.

However, in the case of externally supplying the reagent, a plurality of reagents must be prepared separately from the biochemical reaction cartridge, and if the number of test items is large, the number of necessary reagents is also increased. As a result, replenishment of the reagents becomes complicated and there is a possibility of erroneously selecting the species of the reagents. Further, in the case of incorporating the reagent in the chamber of biochemical reaction cartridge, there is a possibility such that a reaction different from an intended reaction is caused to occur by flowing of the reagent in the chamber into a passage or another chamber due to an environmental change at the time of storage or conveyance during conveyance.

US 2002/123059 A describes how to use luminescence detection mechanism, move microfluid, and control multiple-step biochemical reactions in closed confined microfluidic biochip platform. More particularly, a self-contained disposable biochip with patterned microchannels and compartments having storage means for storing a plurality of samples, reagents, and luminescent substrates. At least one external microactuator in the biochip system produces positive pressure and automates multiple-step reactions in microfluidic platforms for clinical chemistry, cell biology, immunoassay and nucleic acid analysis. The method comprises the steps of transferring sequentially at least one of samples, reagents, and then luminescent substrate from compartments through microchannels to reaction sites.; The luminescent substrates react with probes to form a probe complex resulting into luminescence, which is detected by an optical detector.

US 2002/192112 A discloses an analytical or preparatory system which comprises as a base unit, an adapter, and a substrate. The adapter is attached to an attachment region on the base unit, and the substrate is attached to an attachment region on the adapter. The adapter permits the base unit to be interfaced with a wide variety of different substrates to perform chemical and biological analytical analyses and preparatory procedures.

### Summary of the invention

An object of the present invention is to provide an improved biochemical reaction cartridge and an improved biochemical treatment process. This object is achieved by a biochemical reaction cartridge according to claim 1 and a biochemical treatment process according to claim 7. Advantageous developments thereof are subject-matters of the dependent claims.

A biochemical reaction cartridge having solved the above described problems, eliminates the inconvenience of replenishment of a reagent and erroneous selection of the species of reagent and causes no flowing of the reagent in a chamber into a passage or vibration at the time of storage or conveyance.

Another object of the present invention is to provide a biochemical reaction apparatus for effecting a biochemical reaction by using the biochemical reaction cartridge.

These and other objects, features and advantages of the present invention will become more apparent upon a consideration of the following description of the preferred embodiments of the present invention taken in conjunction with the accompanying drawings.

### BRIEF DESCRIPTION OF THE DRAWINGS

Figure 1 is a perspective view of an embodiment of the biochemical reaction cartridge according to the present invention.
Figure 2 is a plan view of a solution storage portion.
Figure 3 is a partial sectional view of the biochemical reaction cartridge at the time of storage.
Figure 4 is a partial sectional view of the biochemical reaction cartridge in such a state that a valve stem (rod) is pressed by first-stage pushing.
Figure 5 is a partial sectional view of the biochemical reaction cartridge in such a state that a valve stem is pressed by second-state pushing.
Figure 6 is a plan view of a reaction portion.
Figure 7 is a block diagram of a treatment apparatus for controlling movement of a solution and various reactions within the biochemical reaction cartridge.
Figure 8 is a flow chart of a first treatment procedure.
FIgure 9 is a longitudinal sectional view of a part of the chambers shown in Figure 6.
Figure 10 is a longitudinal sectional view of another part of the chambers shown in Figure 6.

### DESCRIPTION OF THE PREFERRED EMBODIMENTS

Hereinbelow, the present invention will be described more specifically with reference to the drawings.

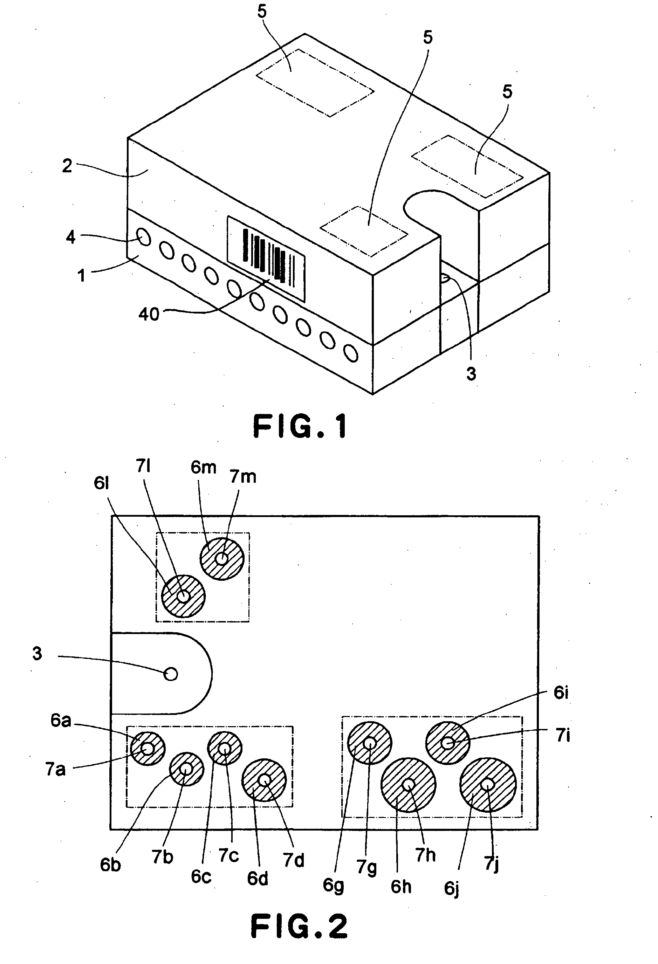

Figure 1 is a perspective view of a biochemical reaction cartridge in this embodiment. Referring to Figure 1, the cartridge has a two-layer structure including a reaction portion 1 where a reaction is effected and a solution storage portion 2 disposed thereon for storing solutions such as a reagent and a cleaning agent.

A body of each of the reaction portion 1 and the solution storage portion 2 comprises synthetic resin, such as polymethyl methacrylate (PMMA), acrylonitrile-butadiene-styrene (ABS) copolymer, polystyrene, polycarbonate, polyester or polyvinyl chloride. In the case where an optical measurement is required, the material for the body of the reaction portion 1 is required to be transparent or semitransparent plastic.

At an upper portion of the reaction portion 1, a specimen port 3 for injecting a specimen such as blood by a syringe (injector) is disposed and sealed up with a rubber cap. On both side surfaces of the reaction portion 1, a plurality of nozzle port 4 into which nozzles are injected to apply or reduce pressure in order to move a solution in the reaction portion 1. A rubber cap is fixed on each of the nozzle ports 4. The other side surface of the reaction portion 1 has a similar structure.

Further, to an upper portion of the solution storage portion 2, 3 aluminum foil sheets are applied for blocking an upper portion of a solution storage chamber described later. The reaction portion 1 and the solution storage portion 2 are bonded to each other through ultrasonic fusion. Incidentally, the reaction portion 1 and the solution storage portion 2 are separately prepared and the solution storage portion 2 may be superposed on the reaction portion 1 at the time of use.

To the side surface of the biochemical reaction cartridge, a bar code label 40 for identifying the type of cartridge is adhered. When the biochemical reaction cartridge is set to a treatment apparatus described later, the bar code is read and the type of the cartridge is identified from the result. Setting of the treatment apparatus is automatically performed so as to effect an appropriate treatment procedure.

Figure 2 is a plan view of the solution storage portion 2 of Figure 1. Referring to Figure 2, the solution storage portion 2 is provided with independent chambers 6a to 6m each containing a solution. In the chambers 6 and 6b, a first hemolytic agent containing EDTA (ethylenediaminetetraacetic acid) for destructing cell membrane and a second hemolytic agent containing a protein modifying agent such as a surfactant are stored, respectively.

In the chamber 6c, particles of magnetic material coated with silica by which DNA is adsorbed are stored. In the chambers 61 and 6m, a first extraction cleaning liquid and a second extraction cleaning liquid which are used for purifying DNA at the time of extraction of DNA are stored, respectively.

An eluent, comprising a buffer of low-concentration salt, for eluting DNA from the magnetic particles is stored in the chamber 6d, a mixture liquid for PCR (polymeraze chain reaction) comprising a primer, polymerase, a dNTP (deoxyribonucleotide triphosphate), a buffer, Cy-3dUTP containing a fluorescent agent, etc., is stored in the chamber 6g. In the chambers 6h and 6j, a cleaning agent containing a surfactant for cleaning a fluorescence-labeled specimen DNA, which is not subjected to hybridization, and a fluorescence label is stored. In the chamber 6i, alcohol for drying the inside of a chamber including a DNA microarray described later is stored. The respective chambers 6a to 6m are provided with a sharp-pointed valve stems (rods) 7a to 7m, respectively, described later, for penetrating the sheets.

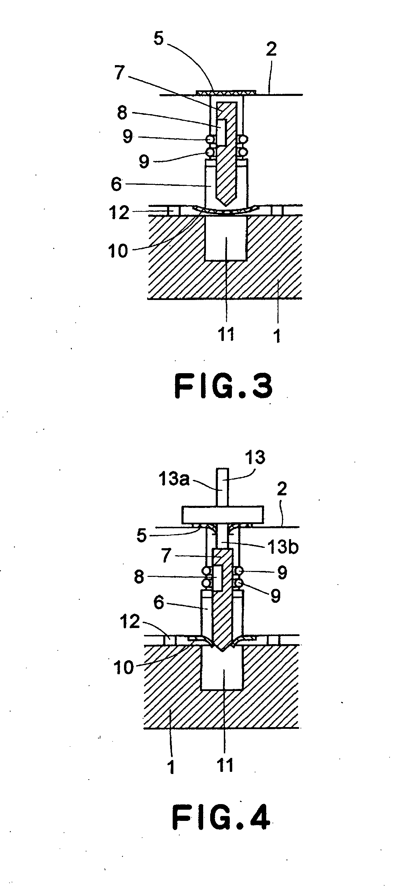

Figure 3 is a sectional view showing a storage state in the biochemical reaction cartridge. Referring to Figure 3, into the chamber 6, containing a solution, of the solution storage portion 2, the valve stem 7 provided with a cut 8 is injected and supported by two o-rings. The bottom of the solution chamber 6 is blocked by an aluminum foil sheet 10. A sealing member 12 is disposed between the chamber 6 and the chamber 11 of the reaction portion 1 so as to make it impossible for air to enter and exit. Changes in volume of solution and air and in pressure due to environment can be absorbed by deformation of the aluminum foil sheet 10, so that the solution in the chamber 6 cannot unexpectedly enter the reaction portion 1.

Figure 4 illustrates such a state that after a tester injects a liquid specimen such as blood from the specimen port 3 and sets the biochemical reaction cartridge to a treatment apparatus described later, a robot arm (not shown) presses the valve stem 7 by first-stage pushing with a shorter pressing rod 13a of a rod needle 13 to stave the aluminum foil sheet, thus starting movement of the solution from the chamber 6 to the chamber 11. In this state, the two O-rings 9 are located in the cut 8 of the valve stem 7, so that the chamber 6 communicates with outside air. Accordingly, the solution can be moved smoothly.

As described above, the biochemical reaction cartridge has the penetrable aluminum sheet 10 as a partition member, so that only the pressing the pressing rod 13a of the tool needle 13 toward the reaction portion 1, it is possible to readily cause the solution to flow from the chamber 6 into the chamber 11 without causing contact of the tool needle 13 with the solution. Incidentally, in this embodiment, immediately under the position of the chamber of the solution storage portion 2, a corresponding chamber of the reaction portion 1 is located but there is no harm in shifting the corresponding chamber from the position immediately under the chamber of the solution storage portion 2 if, e.g., a passage is provided therebetween.

In this embodiment, the chamber of the reaction portion 1 and the chamber of the solution storage portion 2 are in a one-to-one relationship but a plurality of solution storage chambers may be provided per one chamber for the reaction portion 1. Further, in this embodiment, the solution is moved from the solution storage chamber to a blank chamber of the reaction portion 1 but may be moved from the solution storage chamber to a chamber of the reaction portion 1 already containing a specimen or a solution during treatment. Further, in this embodiment, the aluminum foil sheet 10 is used as the partition member but the partition member per se may be a non-penetrable member if it is provided with an ordinary valve and the valve is placed in a penetrable state, i.e., an open state so as to permit flowing of the solution into the chamber of the reaction portion 1.

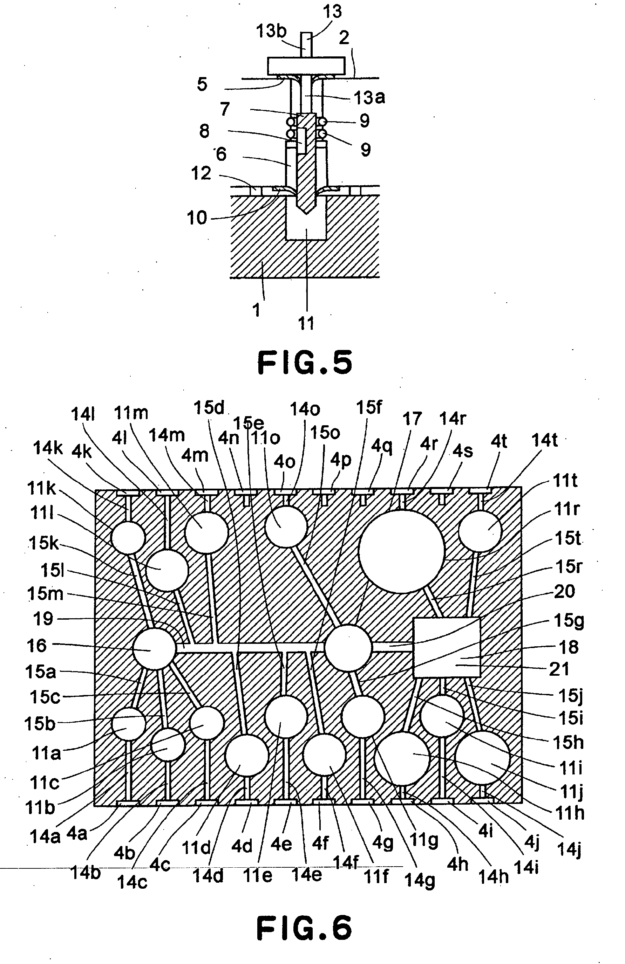

Next, the tester once extracts the tool needle 13 from the treatment apparatus by using the robot arm and turns the tool needle 13 upside down, followed by further pressing the valve stem 7 by second-stage pushing with a longer pressing rod 13b as shown in Figure 5. As a result, air is sealed up by the upper O-ring 9 to permit movement of the solution in the reaction portion 1 as described later. The tester performs this step with respect to all the chambers 6a to 6m. As described above, the solution can be caused to flow into the chamber by the first-stage pushing and the chamber can be sealed up by the second-stage pushing, so that it is possible to effect flowing of the solution into the chamber 11 and sealing of the chamber 11 only by simple pushing operations. Further, the above-described tool needle may be provided in the biochemical reaction cartridge.

Figure 6 is a plan view of the reaction portion 1. Referring to Figure 6, on one side surface of the reaction portion 1, 10 nozzle ports 4a to 4j are provided and also on the other side surface thereof, 10 nozzle ports 4k to 4t are provided. The respective nozzle ports 4a to 4t communicate with chambers 11a to 11t, which are portions or sites for storing the solution or causing a reaction, through corresponding air passages 14a to 14t for air flow, respectively.

In this embodiment, however, the nozzle ports 4n, 4p, 4q and 4s are not used, these nozzle ports do not communicate with the chambers and are used as reserve ports. More specifically, in this embodiment, the nozzle ports 4a to 4j communicate with the chambers 11a to 11j through the passages 14a to 14j, respectively. On the other side surface, the nozzle ports 4k, 41, 4m, 4o, 4r and 4t communicate with the chambers 11k, 11l, 11m, 11o, 11r and 11t through the passages 14k, 14l, 14m, 14o, 14r and 14t, respectively.

The specimen port 3 communicates with a chamber 16. The chambers 11a, 11b, 11c and 11k communicate with the chamber 16, the chambers 11g and 11o communicate with a chamber 17, and the chambers 11h, 111, 11j, 11r and 11t communicate with a chamber 18. Further, the chamber 16 communicate with the chamber 17 via a passage 19, and the chamber 17 communicates with the chamber 18 via a passage 20. With the passage 19, the chambers 11d, 11e, 11f, 11l and 11m communicate via passages 15d, 15e, 15f, 15l and 15m, respectively. At a bottom (undersurface) of the chamber 18, a square hole is provided. To the square hole, a DNA microarray 21, on which several tens to several hundreds of thousand of different species of DNA probes are arranged in high density on a surface of solid phase, such as a glass plate having a size of ca. one square centimeter, with the probe surfaces up, is attached.

It is possible to test a large number of genes at the same time by effecting a hybridization reaction with the specimen DNA with the use of the microarray 21.

The DNA probes are regularly arranged in a matrix form, and an address (position determined by the number of row and the number of column on the matrix) of each of the DNA probes is readily read as information. The genes to be tested includes, e.g., genetic polymorphism of each individual in addition to infections viruses, bacteria and disease-associated genes.

In the chambers 11a and 11b of the reaction portion 1, a first hemolytic agent and a second hemolytic agent to be moved from the chambers 6a and 6b, the solution storage portion 2 are stored, respectively. In the chamber 11c, particles of magnetic material to be moved from the chamber 6f are stored. In the chambers 11l and 11m, a first extraction cleaning liquid and a second extraction cleaning liquid to be moved from the chambers 6l and 6m are stored, respectively. An eluent flowing from the chamber 6d is stored in the chamber 11d, a mixture liquid necessary for PCR (polymeraze chain reaction) moved from the chamber 6g is stored in the chamber 11g.

In the chambers 11h and 11j, cleaning agents to be moved from the chambers 6h and 6j are stored, respectively. In the chamber 11i, alcohol to be moved from the chamber 6i is stored.

The chamber 11e is a chamber in which debris other than DNA of blood accumulates, the chamber 11f is a chamber in which waste of the first and second extraction cleaning liquids in the chambers 11l and 11m accumulate, the chamber 11r is a chamber in which waste of the first and second cleaning agents accumulate, and the chambers 11k, 11o and 11t are blank chambers provided for preventing the solution to flow into the nozzle ports.

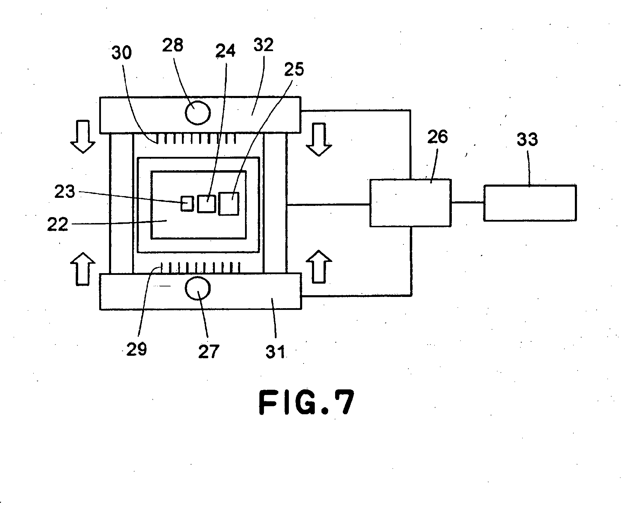

Figure7 is a schematic view of the treatment apparatus for controlling movement of the solution within the biochemical reaction cartridge and various reactions.

On a table 22, the biochemical reaction cartridge is mounted. Further, on the table 22, an electromagnet 23 to be actuated at the time of extracting DNA or the like from the specimen in the cartridge 1, a Peltier element 24 for effecting temperature control at the time of amplifying DNA from the specimen through a method such as PCR (polymerase chain reaction), and a Peltier element 25 for effecting temperature control at the time of performing hybridization between the amplified specimen DNA and the DNA probe on the DNA microarray within the cartridge 1 and at the time of cleaning or washing the specimen DNA which is not hybridized, are disposed and connected to a control unit 26 for controlling the entire treatment apparatus. Further, the robot arm (not shown) for pushing down the valve stem by moving the tool needle 13 above a predetermined chamber on the cartridge as described above, and a bar code reader (not shown) for reading the bar code label applied to the cartridge are provided to the treatment apparatus.

At both side surfaces of the table 22, an electric (motor-driven) syringe pumps 27 and 28 and pump blocks 31 and 32 each of which is a port for discharging or sucking in air by these pumps 27 and 28 and is provided with 10 pump nozzles 29 or 30 on its side surface, are disposed. Between the electric syringe pumps 27 and 28 and the pump nozzles 29 and 30, a plurality of known electric switching (selector) valves (not shown) are disposed and connected to the control unit 26 together with the pumps 27 and 28. The control unit 26 is connected to an input unit 33 to which inputting by a tester is performed. The control unit 26 controls the pump nozzles 29 and 30 so that each of the respective 10 pump nozzles is selectively opened and closed with respect to the electric syringe pumps 27 and 28, respectively.

When the solution is moved from the solution storage portion 2 to the reaction portion 1 and a treatment start signal is inputted, extraction and amplification of DNA or the like are performed within the reaction portion 1. Further, hybridization between the amplified specimen DNA and DNA probes on the DNA microarray disposed in the reaction portion 1 and cleaning of the fluorescence-labeled specimen DNA, which is not hybridized, and the fluorescence label are performed.

In this embodiment, when the tester injects blood as a specimen into the reaction portion through the rubber cap of the specimen port 3 by a syringe or an injector, the blood flows into the chamber 16. Thereafter, the tester places the biochemical reaction cartridge on the table 22 and moves the pump blocks 31 and 32 in directions of arrows indicated in Figure 7 with a mechanism (not shown) by operating an unshown lever, whereby the pump nozzles 29 and 30 are injected into the corresponding nozzle ports 4 of the reaction portion 1.

As described with reference to Figure 6, the nozzle ports 4 are concentrated at two surfaces, i.e., both side surfaces, of the biochemical reaction cartridge, so that it is possible to simplify shapes and arrangements of the electric syringe pumps 27 and 28, the electric switching valves, the pump blocks 31 and 32 containing the pump nozzles 29 and 30, etc. Further, by effecting such a simple operation that the cartridge is sandwiched between the pump blocks 31 and 32 at the same time while ensuring necessary chambers and passages, it is possible to inject the pump nozzles 29 and 30 and simplify the structure of the pump blocks 31 and 32. Further, all the nozzle ports 4a to 4t are disposed at an identical level, i.e., are arranged linearly, whereby all the heights of the passages 14a to 14t connected to the nozzle ports 4a to 4t become equal to each other. As a result, preparation of the passages 14a to 14t becomes easy.

Further, in the treatment apparatus shown in Figure 7, in the case where the length of the pump blocks 31 and 32 is increased n times the original length with respect to n biochemical reaction cartridges, when the n cartridge are arranged in series, it is possible to perform a necessary step to all the n cartridges at the same time. As a result, a biochemical reaction can be performed in the large number of biochemical reaction cartridges with a very simple apparatus structure.

When the tester performs the steps of flowing of the solution into the chamber and hermetically sealing the chamber described with reference to Figures 4 and 5 and then inputs a treatment start instruction at the input unit 33, the bar code label applied to the biochemical reaction cartridge is first read by the bar code reader (not shown) of the treatment apparatus. In the treatment apparatus, treatment sequences necessary for the respective types of cartridges are memorized in advance. When the type of cartridge is identified by the read bar code, the contents and procedures of treatment necessary for the cartridge are automatically determined to start the treatment. When the bar code cannot be read or the read bar code is not a predetermined bar code, the tester can also manually input treatment steps by the input unit 33.

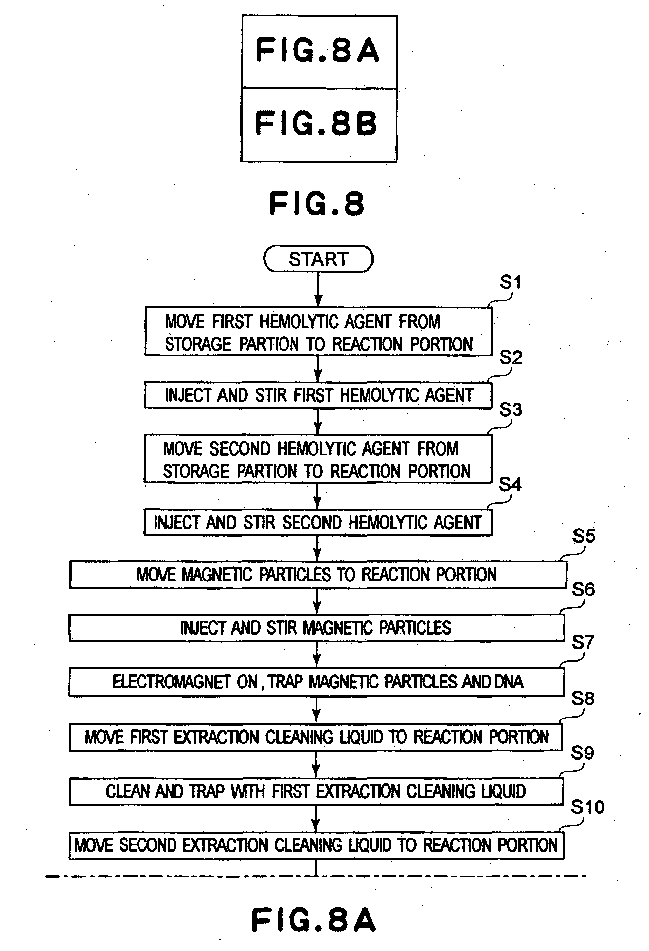

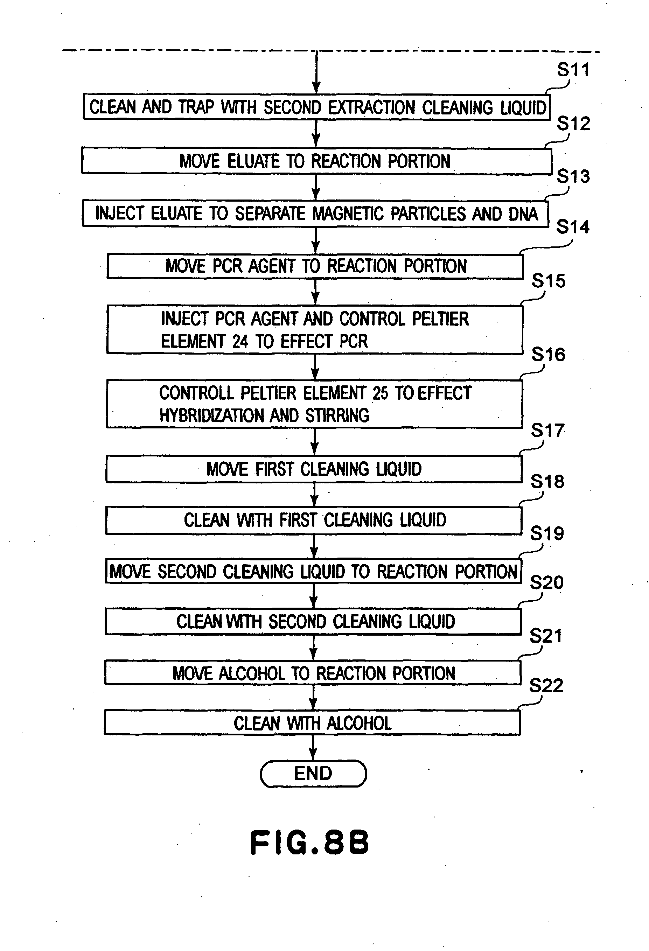

Figure 8 consisting of Figures 8A and 8B) is a flow chart for explaining an example of a treatment procedure in the treatment apparatus in this embodiment.

Referring to Figure 8, in a step S1, the first hemolytic agent is moved from the solution storage chamber 6a to the chamber 11a of the reaction portion 1 by effecting injection of the solution and hermetic sealing as described with reference to Figures 4 and 5. In a step S2, the control unit 26 opens only the nozzle ports 4a and 4k, and air is discharged fbrm the electric syringe pump 27 and Sucked in the reaction portion 1 from the electric syringe pump 28, whereby the first hemolytic agent is injected from the chamber 11a into the chamber 16 containing blood. At this time, by controlling suction of air from the pump 28 so as to start 10 - 200 msec after initiation of air discharge from the pump 27, the solution can flow smoothly without causing splash or scattering thereof at its leading end although it depends on a viscosity of the hemolytic agent and a resistance of the passage.

As described above, by shifting timing of supply and suction of air so as to control a manner of pressure application and pressure reduction, it is possible to cause the solution to flow smoothly. In a preferred embodiment, the solution can be caused to flow further smoothly by effecting such a control that a degree of suction of air from the electric syringe pump 28 is linearly increased from the initiation of air discharge from the pump 27. Further, it becomes possible to alleviate the pressure generated in the reaction portion 1 by applying and reducing pressure in combination. As a result, it is also possible to achieve such an effect that the solution is prevented from flowing into a branched passage or chamber in the case where the solution is not intended to flow into the branched passage or chamber curing movement thereof. These are true in the case of subsequent liquid movement.

The air supply control can be readily realized by using the electric syringe pumps 27 and 28. More specifically, after only the nozzle ports 4a and 4o are opened, discharge and suction of air are repeated alternately by the syringe pumps 27 and 28 to cause repetitive flow and flowback of the solution of the chamber 6 in the passage 19, thus stirring the solution. Alternatively, the solution can be stirred while continuously discharging air from the pump 28 to generate bubbles.

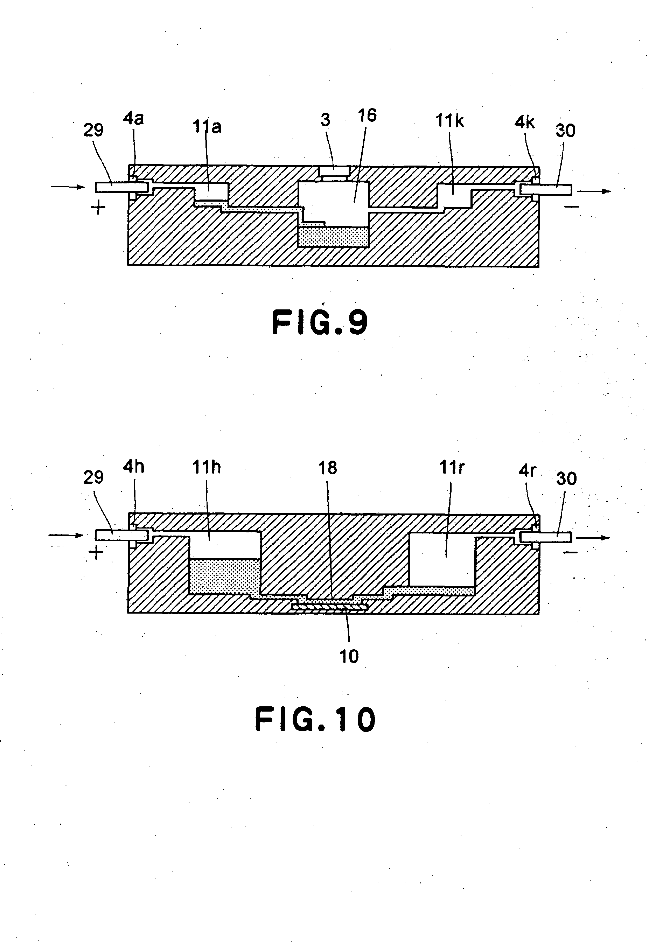

Figure 9 is a sectional view of the reaction portion 1 shown in Figure 6 along a cross section intersecting the chambers 11a, 16 and 11k, and shows such a state that the nozzle port 4a is pressurized by injecting therein the pump nozzle 29 and the nozzle port 4k is reduced in pressure by injecting therein the pump nozzle 30, whereby the first hemolytic agent in the chamber 11a flows into the chamber 16 containing blood.

Referring again to Figure 8, in a step S4, only the nozzle ports 4b and 4k are opened and the second hemolytic agent in the chamber 11b is caused to flow into the chamber 16 in the same manner as in the case of the first hemolytic agent. Similarly, in a step S6, the magnetic particles in the chamber 11c, after being moved from the chamber 6c to the chamber 11c, are caused to flow into the chamber 16. In the steps S4 and S6, stirring is performed in the same manner as in the step S2. In the step S6, DNA resulting from dissolution of cells in the steps S2 and S4 attaches to the magnetic particles.

Thereafter, in a step S7, an electromagnet 23 is turned on and only the nozzle ports 4e and 4k are opened. Then, air is discharged from the electric syringe pump 28 and sucked in form the pump 27 to move the solution from the chamber 16 to the chamber 11e. At the time of movement, the magnetic particles and DNA are trapped in the passage 19 on the electromagnet 23. The suction and discharge by the pumps 27 and 28 are alternately repeated to reciprocate the solution two times between the chambers 16 and 11e, whereby a trapping efficiency of DNA is improved. The trapping efficiency can be further improved by increasing the number of reciprocation. In this case, however, it takes a longer treating time by that much.

As described above, DNA is trapped in a flowing state on such a small passage having a width of about 1 - 2 mm and a height of about 0.2 - 1 mm by utilizing the magnetic particles, so that DNA can be trapped with high efficiency. This is also true for RNA and protein.

Then, in a step S9, the electromagnet 23 is turned off, and only the nozzle ports 4f and 41 are opened. Thereafter, air is discharged from the electric syringe pump 28 and sucked in from the pump 27 to move the first extraction cleaning liquid from the chamber 11l to the chamber 11f. At this time, the magnetic particles and DNA trapped in the step S7 are moved together with the extraction cleaning liquid, whereby cleaning is performed. After the reciprocation of two times is performed in the same manner as in the step S7, the electromagnet 23 is turned on, and the reciprocation of two times is similarly performed to recover the magnetic particles and DNA in the passage 19 on the electromagnet 23 and return the solution to the chamber 11l.

In a step S11, cleaning is further performed in the same manner as in the step S5 by using the second extraction cleaning liquid in the chamber 11m, after being moved from the chamber 6m to the chamber 11m in a step S10, in combination with the nozzle ports 4f and 4m.

In a step 12, the eluent is moved from the chamber 6d to the chamber 11d. In a step S13, only the nozzle ports 4d and 4o are opened while the electromagnet 23 is kept on, and air is discharged from the pump 27 and sucked in from the pump 28, whereby the eluent in the chamber 11d is moved to the chamber 17.

At this time, the magnetic particles and DNA are separated by the action of the eluent, so that only the DNA is moved together with the eluent to the chamber 17, and the magnetic particles remain in the passage 19. Thus, extraction and purification of the DNA are performed. As described above, the chambers 11l and 11m containing the extraction cleaning liquids and the chamber 11f containing waste liquid after the cleaning are separately provided, so that it becomes possible to effect extraction and purification of the DNA in the biochemical reaction cartridge.

Next, in a step S14, the PCR agent is moved from the chamber 6g to the chamber 11g. In a step S15, only the nozzle ports 4g and 4o are opened, and air is discharged from the electric syringe pump 27 and sucked in from the pump 28 to cause the PCR agent in the chamber 11g to flow into the chamber 17. Further, only the nozzle ports 4g and 4t are opened, and air discharge and suction by the pumps 27 and 28 are repeated alternately to cause repetitive flow and flowback of the solution of the chamber 17 in the passage 20, thus stirring the solution. Then, the Peltier element 24 is controlled to retain the solution in the chamber 17 at 96 °C for 10 min. Thereafter, a cycle of heating at 96 °C/10 sec, 55 °C/10 sec, and 72 °C/1 min. is repeated 30 times, thus subjecting the eluted DNA to PCR to amplify the DNA.

In a step S16, only the nozzle ports 4g and 4t are opened, and air is discharged from the electric syringe pump 27 and sucked in from the pump 28 to move the solution in the chamber 17 to the chamber 18. Further, by controlling the Peltier element 25, the solution in the chamber 18 is kept at 45 °C for 2 hours to effect hybridization. At this time, discharge and suction of air by the pumps 27 and 28 are repeated alternately to move the solution between the chamber 18 and the passage 15t, which effects stirring of the solution.

Then, after the first cleaning liquid is moved from the chamber 6h to the chamber 11h in a step S17, in a step S18, while keeping the temperature at 45 °C, only the nozzle ports 4h and 4r are opened, and air is discharged from the electric syringe pump 27 and sucked in from the pump 28 to cause the first cleaning liquid in the chamber 11h to flow into the chamber 11r through the chamber 18 while moving the solution in the chamber 18 to the chamber 11r. The suction and discharge by the pumps 27 and 28 are repeated alternately to reciprocate the solution two times between the chambers 11h, 18 and 11r and finally return the solution to the chamber 11h. Thus, the fluorescence-labeled specimen DNA and the fluorescence label which are not hybridized are cleaned.

Figure 10 is a sectional view of the reaction portion 1 shown in Figure 6 along a cross section intersecting the chambers 11h, 18 and 11r. The reaction portion 1 is pressurized by injecting the pump nozzle 29 into the nozzle port 4h and is reduced in pressure by injecting the pump nozzle 30 into the nozzle port 4r. Figure 10 illustrates such a state that the first cleaning liquid is caused to flow into the chamber 11r through the chamber 18. The chamber 11h actually communicates with the solution storage portion 2 but in Figure 10, is illustrated as a state in which it does not communicate with the solution storage portion 2 by providing a ceiling thereof, for convenience of explanation.

Referring again to Figure 8, after the second cleaning liquid is moved from the chamber 6j to the chamber 11j in a step S19, in a step S20, while keeping the temperature at 45 °C, the cleaning is further effected in the same manner as in the step S18 by using the second cleaning liquid in the chamber 11j in combination with the nozzle ports 4j and 4r, and the solution is finally returned to the chamber 11j. As described above, the chambers 11h and 11j containing the cleaning liquids and the chamber 11r containing waste liquid after the cleaning are separately provided, so that it becomes possible to effect cleaning of the DNA microarray 21 in the biochemical reaction cartridge.

After alcohol is moved from the chamber 6i to the chamber 11i in a step S21, in a step 22, only the nozzle ports 4i and 4r are opened, and air is discharged from the electric syringe pump 27 and sucked in from the pump 28 to move alcohol in the chamber 11i to the chamber 11r through the chamber 18. Thereafter, only the nozzle port 4i and 4t are opened, and air is discharged from the pump 27 and sucked in from the pump 28 to dry the inside of chamber 18.

Thereafter, when the tester operates a lever (not shown), the pump blocks 31 and 32 are moved away from the biochemical reaction cartridge. As a result, the pump nozzles 29 and 30 are removed from the nozzle ports 4 of the cartridge. Then, the tester mounts the cartridge in a reader for DNA microarray, such a known scanner to effect measurement and analysis.

In the above-described embodiment, the identification of the cartridge is performed by using the bar code label but may also be performed by using a two-dimensional bar code, an IC chip, RFID (radio frequency identification), etc. Further, on the basis of external dimensions of the cartridge such as height and length, the number of recesses or projections provided on the side surfaces, the upper surface and the lower surface of the cartridge, and a combination thereof, the type of the cartridge can be identified in various manners. As a result, it is possible to attain a similar effect.

In the above embodiment, the identification of the cartridge is performed and based on the identified type of the cartridge, treatment steps are set. However, it is also possible to set a treatment sequence on the basis of information, on the contents and procedures of treatment steps, which are written in the two-dimensional bar code or the like. Further, in the case of changing testing conditions such as a reaction time cartridge by cartridge, different treatment steps are written in a two-dimensional bar code and the bar code is adhered to the cartridge, whereby it becomes possible to effect a desired reaction step with reliability.

As described hereinabove, the biochemical reaction cartridge according to the present invention has a reaction portion including a chamber and a passage and a solution storage portion, which is isolated or separated from the reaction portion, for storing a solution such as a reagent or a cleaning agent, and is constituted by such a member that it is separated for moving the solution from the solution storage portion to the reaction portion and is penetrable or that it is a penetrable member disposed at a boundary wall portion between the solution storage portion and the reaction portion which contact each other. As a result, respective solutions can be prepared with the biochemical reaction cartridge immediately before the respective treatment steps, so that the biochemical reaction cartridge has the advantage of causing an intended reaction properly without causing a reagent in a chamber to flow into a passage or another chamber even when an environmental change or vibration occurs during a treatment step using another solution.

Further, particularly, a step of moving each of the solutions in the solution storage portion to the reaction portion immediately before use the solution is employed, so that it is possible to effect reliable reaction without causing the solution to flow into adjacent chambers and passages even when vibration of the treatment apparatus occurs or there arises an error of pressure control during treatment in each of the steps.

Further, the treatment apparatus automatically reads the bar code label applied to the biochemical reaction cartridge and identifies the type of the cartridge, thus automatically setting necessary treatment steps. Accordingly, it becomes possible to simply effect the treatment with reliability since it is not necessary for the operation to set a complicated treatment procedure on all such occasions that there are a plurality of cartridge types.

Further, since the biochemical reaction cartridge of the present invention has the above-described structure, it is possible to prepare a solution therein as desired. As a result, the biochemical reaction cartridge eliminates the inconvenience of replenishing a reagent and reduces an error in selection of the type of reagent. In addition, even when an environmental change or vibration is caused to occur at the time of storage and conveyance, the reagent in the chamber does not flow into a passage or another chamber. Accordingly, the biochemical reaction cartridge can cause an intended reaction appropriately.

While the invention has been described with reference to the structures disclosed herein, it is not confined to the details set forth and this application is intended to cover such modifications or changes as may come within the purposes of the improvements or the scope of the following claims.

## Claims

1. A biochemical reaction cartridge, comprising:
a reaction portion (1), comprising a chamber (11) and a passage, for effecting a biochemical reaction, and
a solution storage portion (2), which is isolated or separated from said reaction portion, for storing a solution in a position corresponding to the chamber (6),
wherein said cartridge is provided with a penetrable partition member (10) disposed between said solution storage portion (2) and said reaction portion (1) so as to move the solution from said solution storage portion (2) to the chamber (11) of said reaction portion (1),
wherein said partition member (10) is penetrable by pushing with a valve stem (7),
wherein the chamber (11) is opened outward by a first-stage pushing of the valve stem (7) with a tool needle (13) to move the solution in said solution storage portion (2) to the chamber (6), and is sealed up by a second-stage pushing of the valve stem (7) with the tool needle (13).

2. A cartridge according to Claim 1, wherein the tool needle (13) is provided with two pressing rods (13a, 13b) including a shorter pressing rod (13a) for use in the first-stage pushing and a longer pressing rod (13b) for use in the second-stage pushing.

3. A cartridge according to Claim 2, wherein the shorter and longer pressing rods (13a, 13b) are coaxially disposed opposite from each other.

4. A cartridge according to Claim 1, wherein said cartridge has code for representing information on a treatment sequence including the order of penetration of said partition member (10).

5. A cartridge according to Claim 1, wherein said cartridge has identification code for representing the type of cartridge.

6. A biochemical reaction cartridge according to claim 1,
wherein
means (27, 28) are provided for allowing an air flow through said chamber (11) and said passage as to control the flow of the solution.

7. A biochemical treatment process which uses a biochemical reaction cartridge according to claims 1 to 6; said process comprising:
a first step of moving a first solution from an associated first storage chamber (6) to a corresponding first chamber (11) of the reaction portion (1) by penetrating said at least one partition member,
a second step of effecting treatment with the solution moved to the chamber (11) of the reaction portion (1),
a third step of moving a second solution in a storage chamber (6) other than the chamber (11) from which the solution is moved in said first step by selectively penetrating at least one second partition member other than the partition member used in said first step, and
a fourth step of effecting treatment with the solution moved to the storage chamber in said third step.

8. A process according to Claim 7, wherein said cartridge has code for representing information on a treatment sequence including the order of penetration of said partition members.

9. A process according to Claim 7, wherein said cartridge has identification code for representing the type of cartridge.

## Patentansprüche

1. Biochemische Reaktionskartusche, die folgendes aufweist:
einen Reaktionsabschnitt (1), der eine Kammer (11) und einen Durchgang aufweist, zum Bewirken einer biochemischen Reaktion, und
einen Lösungsspeicherabschnitt (2), der von dem Reaktionsabschnitt isoliert oder getrennt ist, zum Speichern einer Lösung an einer Position, die der Kammer (6) entspricht,
wobei die Kartusche mit einem durchdringbaren Unterteilungsbauteil (10) versehen ist, das zwischen dem Lösungsspeicherabschnitt (2) und dem Reaktionsabschnitt (1) angeordnet ist, um so die Lösung von dem Lösungsspeicherabschnitt (2) zu der Kammer (11) des Reaktionsabschnitts (1) zu bewegen,
wobei das Unterteilungsbauteil (10) durch ein Drücken mit einem Ventilschaft (7) durchdringbar ist,
wobei die Kammer (11) durch ein erststufiges Drücken des Ventilschafts (7) mit einer Werkzeugnadel (13) nach außen hin geöffnet wird, um die Lösung in dem Lösungsspeicherabschnitt (2) zu der Kammer (6) zu bewegen, und durch ein zweitstufiges Drücken des Ventilschafts (7) mit der Werkzeugnadel (11) abgedichtet wird.

2. Kartusche nach Anspruch 1, wobei die Werkzeugnadel (13) mit zwei Drückstäben (13a, 13b) versehen ist, die einen kürzeren Drückstab (13a) zur Verwendung in dem erststufigen Drücken und einen längeren Drückstab (13b) zur Verwendung in dem zweitstufigen Drücken umfassen.

3. Kartusche nach Anspruch 2, wobei der kürzere und der längere Drückstab (13a, 13b) koaxial entgegengesetzt zueinander angeordnet sind.

4. Kartusche nach Anspruch 1, wobei die Kartusche einen Code zum Repräsentieren von Informationen bezüglich einer Behandlungssequenz hat, welche die Reihenfolge einer Penetration des Unterteilungsbauteils (10) aufweist.

5. Kartusche nach Anspruch 1, wobei die Kartusche einen Identifikationscode zum Repräsentieren der Art der Kartusche hat.

6. Biochemische Reaktionskartusche nach Anspruch 1, wobei
Mittel (27, 28) zum Ermöglichen einer Luftströmung durch die Kammer (11) und den Durchgang vorgesehen sind, um die Strömung der Lösung zu steuern.

7. Biochemischer Behandlungsprozess, der eine biochemische Reaktionskartusche nach Ansprüchen 1 bis 6 verwendet, wobei der Prozess folgendes aufweist:
einen ersten Schritt eines Bewegens einer ersten Lösung von einer assoziierten ersten Speicherkammer (6) zu einer entsprechenden ersten Kammer (11) des Reaktionsabschnitts (1) durch ein Penetrieren des zumindest einen Unterteilungsbauteils,
einen zweiten Schritt eines Bewirkens einer Behandlung mit der Lösung, die zu der Kammer (11) des Reaktionsabschnitts (1) bewegt ist,
einen dritten Schritt eines Bewegens einer zweiten Lösung in eine Speicherkammer (6), die zu der Kammer (11) verschieden ist, von welcher die Lösung in dem ersten Schritt durch ein ausgewähltes Penetrieren von zumindest einem zweiten Unterteilungsbauteil, das zu dem Unterteilungsbauteil, das in dem ersten Schritt verwendet ist, verschieden ist, bewegt wird, und
einen vierten Schritt eines Bewirkens einer Behandlung mit der Lösung, die in dem dritten Schritt zu der Speicherkammer hin bewegt ist.

8. Prozess nach Anspruch 7, wobei die Kartusche einen Code zum Repräsentieren von Informationen bezüglich einer Behandlungssequenz hat, die die Reihenfolge einer Penetration der Unterteilungsbauteile aufweist.

9. Prozess nach Anspruch 7, wobei die Kartusche einen Identifikationscode zum Repräsentieren der Art der Kartusche hat.

## Revendications

1. Cartouche de réaction chimique comprenant :
une partie de réaction (1) comprenant une chambre (11) et un passage pour effectuer une réaction biochimique, et
une partie de stockage de solution (2) qui est isolée ou séparée de ladite partie de réaction, pour stocker une solution dans une position correspondant à la chambre (6),
dans laquelle ladite cartouche est dotée d'un élément de séparation pénétrable (10) disposé entre ladite partie de stockage de solution (2) et ladite partie de réaction (1) afin de faire passer la solution de ladite partie de stockage de solution (2) à la chambre (11) de ladite partie de réaction (1),
dans laquelle ledit élément de séparation (10) est pénétrable en poussant avec une tige de valve (7),
dans laquelle la chambre (11) est ouverte vers l'extérieur par une poussée de premier étage de la tige de valve (7) avec une aiguille d'instrument (13) pour faire passer la solution dans ladite partie de stockage de solution (2) à la chambre (6) et est hermétiquement fermée par une poussée de second étage de la tige de valve (7) avec l'aiguille d'instrument (13).

2. Cartouche selon la revendication 1, dans laquelle l'aiguille d'instrument (13) est prévue avec deux tiges de pression (13a, 13b) comprenant une tige de pression plus courte (13a) destinée à être utilisée dans la poussée de premier étage et une tige de pression plus longue (13b) destinée à être utilisée dans la poussée de second étage.

3. Cartouche selon la revendication 2, dans laquelle les tiges de pression plus courte et plus longue (13a, 13b) sont disposées de manière coaxiale à l'opposé l'une de l'autre.

4. Cartouche selon la revendication 1, dans laquelle ladite cartouche a un code pour représenter l'information sur une séquence de traitement comprenant l'ordre de pénétration dudit élément de séparation (10).

5. Cartouche selon la revendication 1, dans laquelle ladite cartouche a un code d'identification pour représenter le type de cartouche.

6. Cartouche de réaction biochimique selon la revendication 1,
dans laquelle
on prévoit des moyens (27, 28) pour permettre un écoulement d'air à travers ladite chambre (11) et ledit passage afin de réguler l'écoulement de la solution.

7. Procédé de traitement biochimique qui utilise une cartouche de réaction biochimique selon les revendications 1 à 6 ; ledit procédé comprenant :
une première étape consistant à faire passer une première solution d'une première chambre de stockage (6) associée à une première chambre (11) correspondante de la partie de réaction (1) en pénétrant dans ledit au moins un élément de séparation,
une deuxième étape consistant à effectuer le traitement avec la solution qui est passée dans la chambre (11) de la partie de réaction (1),
une troisième étape consistant à faire passer une seconde solution dans une chambre de stockage (6) différente de la chambre (11) à partir de laquelle la solution a été déplacée à ladite première étape en pénétrant sélectivement dans le au moins un second élément de séparation différent de l'élément de séparation utilisé dans ladite première étape, et
une quatrième étape consistant à effectuer le traitement avec la solution qui est passée dans la chambre de stockage à ladite troisième étape.

8. Procédé selon la revendication 7, dans lequel ladite cartouche a un code pour représenter l'information sur une séquence de traitement comprenant l'ordre de pénétration desdits éléments de séparation.

9. Procédé selon la revendication 7, dans lequel ladite cartouche a un code d'identification pour représenter le type de cartouche.
